# EUROPÄISCHE PATENTSCHRIFT

(11) **EP 1 765 483 B1**
(45) Veröffentlichungstag und Bekanntmachung des Hinweises auf die Patenterteilung: **03.10.2018**
(21) Anmeldenummer: 05773949.2
(22) Anmeldetag: 21.06.2005
(51) Int. Cl.: B01D 39/20, F01N 3/022

(54) **VERFAHREN ZUR HERSTELLUNG EINES KERAMISCHEN FILTERELEMENTS**
METHOD FOR PRODUCING A CERAMIC FILTER ELEMENT
PROCEDE DE PRODUCTION D'UN ELEMENT FILTRANT CERAMIQUE

(30) Priorität: 10.07.2004 DE 102004033494
(43) Veröffentlichungstag der Anmeldung: 28.03.2007
(73) Patentinhaber: MANN + HUMMEL GMBH, 71636 Ludwigsburg (DE)
(72) Erfinder: GERLACH, Karin, 72800 Eningen unter Achalm (DE); TUDYKA, Stefan, 86356 Neusäss (DE)
(86) Internationale Anmeldenummer: PCT/EP2005/052884
(87) Internationale Veröffentlichungsnummer: WO 2006/005668

(56) Entgegenhaltungen:
- US-A- 4 652 286
- DATABASE WPI Section Ch, Week 199022 Derwent Publications Ltd., London, GB; Class F03, AN 1990-167294 XP002353107 & JP 02 107308 A (NISSHIN STEEL CO LTD) 19. April 1990 (1990-04-19)

## Beschreibung

Die Erfindung bezieht sich auf ein Verfahren zur Herstellung eines keramischen Filterelements in einem Abgasfilter für Brennkraftmaschinen.

In Patent Abstracts of Japan JP 63134020 A wird ein keramisches Filterelement für einen Abgasfilter in einer Brennkraftmaschine beschrieben, das aus einer gewellten, spiralförmig aufgewickelten Filterbahn aufgebaut ist. Zur Herstellung der Filterbahn werden hitzeresistente, anorganische Fasern in einer wässrigen Suspension mit Keramikpulver vermischt und zu einer Bahn verarbeitet. Mehrere übereinander liegende Bahnen werden zu der gewünschten Form des Filterkörpers zusammengerollt, wobei zwischen benachbarten Filterbahnen wabenförmige Strömungskanäle gebildet sind. Der Filterkörper wird anschließend bei hoher Temperatur gebrannt.

Nachteilig bei diesem Herstellungsverfahren ist der verhältnismäßig hohe Aufwand, der dadurch entsteht, dass zunächst in einem ersten Verfahrensschritt aus der Suspension von hitzeresistenten, anorganischen Fasern und dem keramischen Rohpulver eine Filterbahn hergestellt werden muss, die anschließend in einem zweiten Verfahrensschritt zur gewünschten Filterform weiter verarbeitet und danach in einem dritten Verfahrensschritt ausgebrannt wird. Ein weiterer Nachteil liegt darin, dass die anorganischen Fasern im fertigen Filterkörper die Wirksamkeit der Filterung mindern können.

JP 2 107308 A offenbart ein Verfahren zur Herstellung eines keramischen Filterelementes bei dem zunächst eine brennbare, nicht keramische Trägerbahn mit einem keramischen Schlicker getränkt und erst danach in der gewünschten geometrischen Form gebracht und im Anschluss gehärtet und ausgebrannt wird.

Der Erfindung liegt das Problem zugrunde, ein keramisches Filterelement in einem Abgasfilter für Brennkraftmaschinen zu schaffen, das leicht herzustellen ist und sich durch gute Filtereigenschaften auszeichnet. Das Filterelement soll eine hohe Stabilität und Hitzebeständigkeit aufweisen, außerdem sollen unterschiedliche Filterkörpergeometrien realisierbar sein. Dieses Problem wird erfindungsgemäß mit den Merkmalen des Anspruches 1 gelöst. Die Unteransprüche geben zweckmäßige Weiterbildungen an.

Bei dem erfindungsgemäßen Verfahren zur Herstellung eines keramischen Filterelements in einem Abgasfilter für Brennkraftmaschinen wird in einem ersten Herstellungsschritt eine brennbare, nicht keramische Trägerbahn mit einem keramischen Schlicker getränkt. Bei dieser nichtkeramischen Trägerbahn kann sowohl organisches Material als auch anorganisches Material eingesetzt werden. Als besonders vorteilhaft erweist sich eine Trägerbahn aus Papier.

Die Trägerbahn wird vor dem Tränken mit dem keramischen Schlicker in die gewünschte Form gebracht, die während des Tränkens und anschließenden Brennens beibehalten wird. In einem anschließenden zweiten Herstellungsschritt wird die mit dem keramischen Schlicker getränkte und in die gewünschte geometrische Form gebrachte Trägerbahn so weit ausgebrannt, bis das Material der Trägerbahn verbrannt ist und ein starrer Filterkörper gebildet worden ist. Da der keramische Schlicker die Trägerbahn vollständig durchtränkt, bleibt nach dem Ausbrennen des Materials der Trägerbahn ein komplettes Abbild der geometrischen Struktur der Trägerbahn erhalten, bestehend aus dem Keramikmaterial.

Dieses Verfahren zeichnet sich zum einen dadurch aus, dass grundsätzlich nur zwei Verfahrensschritte für die Herstellung des keramischen Filterelementes ausreichen. Zum anderen ist die Verwendung der Trägerbahn vorteilhaft, da die Trägerbahn bereits in die gewünschte geometrische Struktur gebracht werden kann, beispielsweise geriffelt oder gewellt sein kann, um die Strömungsbahnen für das Abgas herzustellen, so dass auf eine zusätzliche Formgebung nach dem Einbringen des keramischen Schlickers verzichtet werden kann. Schließlich ist auch vorteilhaft, dass nach dem Tränken mit dem keramischen Schlicker der Filterkörper seine geometrische Form beibehält, so dass nach dem Aushärten bzw. dem Brennen die gewünschte geometrische Form des Filterkörpers ohne Nachbearbeitung erreicht bzw. beibehalten wird. Außerdem wird auch die Filterreinigungsleistung verbessert, da es prinzipiell ausreicht, dass der Filterkörper nur aus Keramikmaterial besteht und keine zusätzliche Substanzen aufweist, die die Reinigungsleistung beeinträchtigen könnten.

Die in dieser Weise hergestellten Filterelemente werden insbesondere als Dieselrußfilter und Katalysatorträger eingesetzt.

Gemäß einer vorteilhaften Weiterbildung ist vorgesehen, dass in den keramischen Schlicker eine katalytische Substanz eingebracht wird, so dass die Infiltration der Trägerbahn mit dem keramischen Schlicker und das Einbringen der katalytischen Substanz in einem Schritt durchgeführt werden können.

Um der Trägerbahn die erforderliche Stabilität zu geben, die notwendig ist, um beim Infiltrieren mit dem keramischen Schlicker eine unerwünschte Verformung zu vermeiden, kann es zweckmäßig sein, die Trägerbahn mit einem Stützkörper zu versehen, beispielsweise ein Stützgitter auf die Trägerbahn aufzubringen. Dieser Stützkörper kann seinerseits aus einem brennbaren Material bestehen, welches beim Brennen des gesamten Filterkörpers verbrannt wird. Es ist aber auch möglich, den Stützkörper aus Keramikmaterial zu fertigen, der nach dem Fertigstellen des Fertigkörpers in diesem verbleibt und an der Filtrierung teilnimmt. Schließlich ist es auch möglich, den Stützkörper als Heizelement auszubilden, beispielsweise in Form von Heizdrähten, die auch nach dem Brennen im Filterkörper verbleiben und für eine regelmäßige thermische Regenerierung des Filters erhitzt werden können.

Um einen Filterkörper mit im Querschnitt wabenförmiger Struktur zu schaffen, bei dem in Achsrichtung des Filterkörpers Strömungskanäle für das zu reinigende Abgas gebildet sind, können zwei übereinander liegende Trägerbahnen miteinander verklebt werden, wobei mindestens eine der beiden Trägerbahnen geriffelt oder gewellt ist, um die besagten Strömungskanäle auszubilden. Die Verklebung der übereinander liegenden Trägerbahnen erfolgt zweckmäßig vor dem Tränken mit dem keramischen Schlicker. Zwei übereinander liegende Trägerbahnen können zu einem etwa zylindrischen Filterkörper aufgerollt werden, der einen Wickelfilter bildet. Um die Strömungskanäle an einer Stirnseite zu verschließen, was erforderlich ist, damit das Abgas den Filterkörper radial durchströmt, wird zweckmäßig ein keramischer Kleber zwischen den aufeinander liegenden Trägerbahnen im Bereich der einen Stirnseite der Strömungskanäle aufgebracht. Der keramische Kleber härtet mit dem Ausbrennen aus und verbleibt als Pfropfen im stirnseitigen Abschnitt der Strömungskanäle.

Um vor dem Ausbrennen übereinander liegende Trägerbahnen in Form zu halten, kann es vorteilhaft sein, diese mittels eines Klebers zu verbinden, der beim Aushärten zumindest weitgehend rückstandslos verbrennt. Als Klebstoff kommt beispielsweise ein polymerer Kleber in Betracht.

In einer weiteren zweckmäßigen Ausführung wird nach dem Aushärten die Porengröße des Filterkörpers durch Aufbringen einer Schicht, beispielsweise im Wege der Sol-Gel-Technik verändert, bei der ein Sol in Form eines Lackes mit bekannten Verfahren wie zum Beispiel Tauchen, Spritzen oder Schleudern auf die Oberfläche aufgebracht wird und eine Gelschicht bildet. Diese Gelschicht wird in einem Folgeprozess zu einer Keramikschicht versintert oder ausgehärtet.

Weitere Vorteile und zweckmäßige Ausführungen sind den weiteren Ansprüchen, der Figurenbeschreibung und den Zeichnungen zu entnehmen. Es zeigen:
- Fig. 1: eine Darstellung von zwei Trägerbahnen, die mit keramischem Schlicker infiltriert und mittels eines Klebers oder einer Dichtmasse miteinander verbunden werden, wodurch Strömungskanäle zwischen den Trägerbahnen einenends abgedichtet werden,
- Fig. 2: eine perspektivische Ansicht eines spiralförmig aufgewickelten, zu einem Zylinderkörper aufgerollten Filterelement, bestehend aus den beiden gemäß Fig. 1 verbundenen Trägerbahnen,
- Fig. 3: eine Ansicht auf die Stirnseite des Filterelementes.

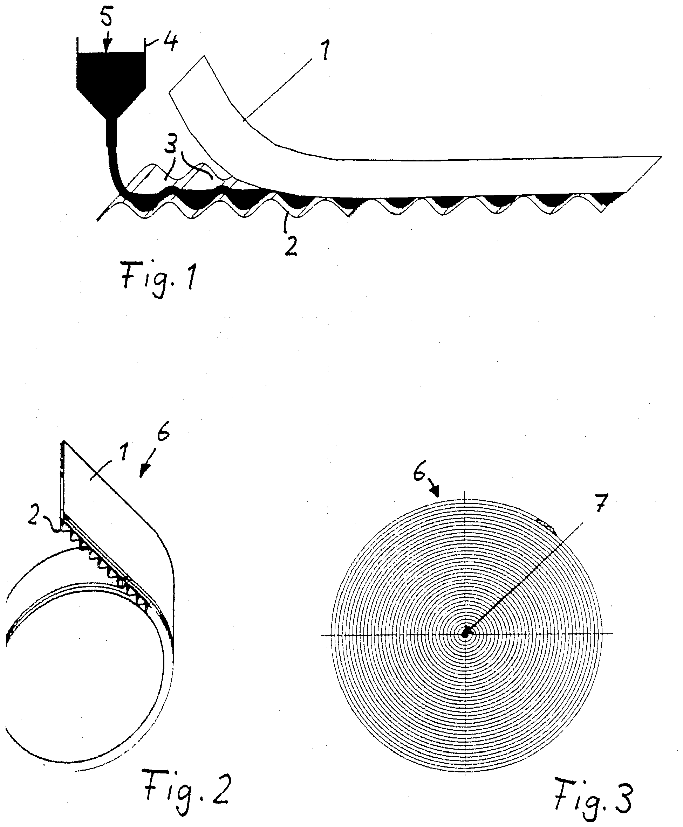

Wie in Fig. 1 dargestellt, werden zur Herstellung eines Filterelementes, welches in einem Abgasfilter für Brennkraftmaschinen eingesetzt werden soll, zwei Trägerbahnen 1 und 2 übereinander gelegt und mithilfe eines keramischen Klebers 5 miteinander verbunden. Die Trägerbahnen 1 und 2 sind als Papierbahnen ausgeführt und bestehen aus Zellulose, in Frage kommen aber auch sonstige organische oder anorganische Substanzen, die brennbar sind. Die untere Trägerbahn 2 ist gewellt ausgebildet, wodurch parallel verlaufende Strömungskanäle 3 entstehen. Die oben aufliegende Trägerbahn ist glatt ausgeführt. Beide Trägerbahnen werden über den über einen Trichter 4 zuzuführenden Kleber 5 miteinander verbunden, der im Bereich einer Stirnseite der Strömungskanäle 3 eingebracht wird und zusätzlich zur Verbindung der beiden Trägerbahnen auch die Funktion hat, die Strömungskanäle 3 einenends zu verschließen.

Die Verwendung eines keramischen Klebers bietet den Vorteil, dass dieser auch nach dem anschließenden Ausbrennen erhalten bleibt, so dass die Strömungskanäle sicher verschlossen bleiben. Sofern nur die beiden Trägerbahnen 1 und 2 miteinander verklebt werden sollen, ohne die zusätzliche Funktion, die Strömungskanäle einenends zu verschließen, kommt auch ein brennbarer Kleber in Betracht, beispielsweise ein polymerer Kleber, der nur die Funktion hat, die Relativposition zwischen beiden Trägerbahnen zu sichern und nach dem Ausbrennen vollständig verbrannt ist.

Gemäß Fig. 2 werden die beiden Trägerbahnen 1 und 2 zum Erreichen der endgültigen Form spiralförmig aufgewickelt. Dies erfolgt vorteilhaft noch vor dem Infiltrieren mit dem keramischen Schlicker und dem daran sich anschließenden Aushärten und Ausbrennen.

Wie der stirnseitigen Ansicht gemäß Fig. 3 zu entnehmen, kann es außerdem zweckmäßig sein, zur Verbesserung der Stabilität des aufgewickelten Filterelementes den Wickelanfang 7 im Zentrum mit Dichtmasse oder Klebstoff zu vergießen.

Als keramisches Material im Schlicker kann Aluminiumoxid, Cordierit, Mullit oder Siliciumcarbid verwendet werden. In einer weiteren vorteilhaften Ausführung werden in das Filterelement 6 Heizelemente eingebracht, beispielsweise Heizdrähte, um zum Durchführen einer regelmäßigen Filterregeneration das Filterelement erhitzen zu können.

## Patentansprüche

1. Verfahren zur Herstellung eines keramischen Filterelementes (6) in einem Abgasfilter für Brennkraftmaschinen, bei dem zunächst eine brennbare, nichtkeramische Trägerbahn (1, 2) mit einem keramischen Schlicker getränkt und anschließend in der gewünschten geometrischen Form soweit ausgebrannt wird, bis die Trägerbahn (1, 2) verbrannt und ein starrer Filterkörper gebildet ist, **dadurch gekennzeichnet,**
**dass** die Trägerbahn (1, 2) vor dem Tränken mit dem keramischen Schlicker in die gewünschte Form gebracht wird, die während des Tränkens und anschließenden Brennens beibehalten wird.

2. Verfahren nach Anspruch 1,
**dadurch gekennzeichnet,**
**dass** in den keramischen Schlicker eine katalytische Substanz eingebracht wird.

3. Verfahren nach Anspruch 1 oder 2,
**dadurch gekennzeichnet,**
**dass** die Trägerbahn (1, 2) aus organischem Material, beispielsweise Zellulose besteht.

4. Verfahren nach Anspruch 1 oder 2,
**dadurch gekennzeichnet,**
**dass** die Trägerbahn (1, 2) aus synthetischem Material besteht.

5. Verfahren nach einem der Ansprüche 1 bis 4,
**dadurch gekennzeichnet,**
**dass** die Trägerbahn (1, 2) von einem Stützkörper gestützt ist.

6. Verfahren nach einem der Ansprüche 1 bis 5,
**dadurch gekennzeichnet,**
**dass** zwei übereinanderliegende Trägerbahnen (1, 2) miteinander verklebt werden und mindestens eine Trägerbahn (2) in der Weise vorgeformt ist, dass Strömungskanäle (3) gebildet sind.

7. Verfahren nach Anspruch 6,
**dadurch gekennzeichnet,**
**dass** polymere Kleber zum Verkleben der übereinanderliegenden Trägerbahnen (1, 2) verwendet werden.

8. Verfahren nach Anspruch 6 oder 7,
**dadurch gekennzeichnet,**
**dass** die Strömungskanäle (3) durch Aufbringen eines keramischen Klebers (5) verschlossen werden.

9. Verfahren nach einem der Ansprüche 1 bis 8,
**dadurch gekennzeichnet,**
**dass** die Trägerbahn (1, 2) mit einem elektrisch leitfähigen Heizelement verbunden wird.

10. Verfahren nach einem der Ansprüche 1 bis 9,
**dadurch gekennzeichnet,**
**dass** als keramisches Material im Schlicker Aluminiumoxid, Cordierit, Mullit oder Siliciumcarbid verwendet wird.

11. Verfahren nach einem der Ansprüche 1 bis 10,
**dadurch gekennzeichnet,**
**dass** nach dem Aushärten die Porengröße des Filterkörpers mittels Aufbringen einer Schicht, beispielsweise durch Sol-Gel-Technik verändert wird.

## Claims

1. Process for producing a ceramic filter element (6) in an exhaust gas filter for internal combustion engines, in which first a combustible, non-ceramic carrier web (1, 2) is impregnated with a ceramic slurry and then burnt out in the desired geometric form until the carrier web (1, 2) is burnt and a rigid filter body is formed,
**characterized in**
**that** the carrier web (1, 2) prior to impregnation is brought into the desired shape with the ceramic slurry, which shape is maintained during impregnation and subsequent burning.

2. Process according to claim 1,
**characterized in**
**that** a catalytic substance is introduced into the ceramic slurry.

3. Process according to claim 1 or 2,
**characterized in**
**that** the carrier web (1, 2) consists of organic material, for example cellulose.

4. Process according to claim 1 or 2,
**characterized in**
**that** the carrier web (1, 2) consists of synthetic material.

5. Process according to one of the claims 1 to 4,
**characterized in**
**that** the carrier web (1, 2) is supported by a support member.

6. Process according to one of the claims 1 to 5,
**characterized in**
**that** two superimposed carrier webs (1, 2) are glued together and that at least one carrier web (2) is preformed in such a way that flow channels (3) are formed.

7. Process according to claim 6,
**characterized in**
**that** polymeric adhesives are used for bonding the superposed carrier webs (1, 2).

8. Process according to claim 6 or 7,
**characterized in**
**that** the flow channels (3) are closed by applying a ceramic adhesive (5).

9. Process according to one of the claims 1 to 8,
**characterized in**
**that** the carrier web (1, 2) is connected to an electrically conductive heating element.

10. Process according to one of the claims 1 to 9,
**characterized in**
**that** the ceramic material used in the slurry is aluminum oxide, cordierite, mullite or silicon carbide.

11. Process according to one of the claims 1 to 10,
**characterized in**
**that** after curing, the pore size of the filter body is changed by applying a layer, for example using the sol-gel technique.

## Revendications

1. Procédé de fabrication d'un élément filtrant (6) céramique dans un filtre à gaz d'échappement pour moteurs à combustion interne, dans lequel une bande de support (1, 2) inflammable et non céramique est d'abord imprégnée d'une barbotine céramique puis cuite dans la forme géométrique souhaitée jusqu'à ce que la bande de support (1, 2) soit brûlée et qu'un corps de filtre rigide se forme,
**caractérisé en ce**
**qu'**avant d'être imprégnée de la barbotine céramique, la bande de support (1, 2) est mise dans la forme souhaitée et conserve cette forme pendant l'imprégnation et la cuisson subséquente.

2. Procédé selon la revendication 1,
**caractérisé en ce**
**qu'**une substance catalytique est introduite dans la barbotine céramique.

3. Procédé selon la revendication 1 ou 2,
**caractérisé en ce**
**que** la bande de support (1, 2) est constituée d'un matériau organique, par exemple de cellulose.

4. Procédé selon la revendication 1 ou 2,
**caractérisé en ce**
**que** la bande de support (1, 2) est constituée d'un matériau synthétique.

5. Procédé selon l'une des revendications 1 à 4,
**caractérisé en ce**
**que** la bande de support (1, 2) est soutenue par un élément d'appui.

6. Procédé selon l'une des revendications 1 à 5,
**caractérisé en ce**
**que** deux bandes de support (1, 2) superposées sont collées l'une à l'autre et qu'au moins une bande de support (2) est préformée de manière à générer des canaux d'écoulement (3).

7. Procédé selon la revendication 6,
**caractérisé en ce**
**que** des adhésifs polymères sont utilisés pour coller les bandes de support (1, 2) superposées.

8. Procédé selon la revendication 6 ou 7,
**caractérisé en ce**
**que** les canaux d'écoulement (3) sont obturés par application d'un adhésif céramique (5).

9. Procédé selon l'une des revendications 1 à 8,
**caractérisé en ce**
**que** la bande de support (1, 2) est reliée à un élément chauffant électroconducteur.

10. Procédé selon l'une des revendications 1 à 9,
**caractérisé en ce**
**que** le matériau céramique utilisé dans la barbotine est de l'oxyde d'aluminium, de la cordiérite, de la mullite ou du carbure de silicium.

11. Procédé selon l'une des revendications 1 à 10,
**caractérisé en ce**
**qu'**après le durcissement, la taille des pores du corps de filtre est modifiée par application d'une couche, par exemple selon le procédé sol-gel.
